# EUROPÄISCHE PATENTSCHRIFT

(11) **EP 1 688 061 B1**
(45) Veröffentlichungstag und Bekanntmachung des Hinweises auf die Patenterteilung: **27.06.2007**
(21) Anmeldenummer: 06000545.1
(22) Anmeldetag: 12.01.2006
(51) Int. Cl.: A46B 13/06, B24D 13/18

(54) **Rotationswerkzeug**
Rotary tool
Outil rotatif

(30) Priorität: 03.02.2005 DE 102005005178; 04.03.2005 DE 102005009854
(43) Veröffentlichungstag der Anmeldung: 09.08.2006
(73) Patentinhaber: MONTI-WERKZEUGE GMBH, 53227 Bonn (DE)
(72) Erfinder: Montabaur, Werner, 53639 Königswinter (DE)
(74) Vertreter: Nunnenkamp, Jörg

(56) Entgegenhaltungen:
- DE-A1- 1 914 799
- GB-A- 463 367
- GB-A- 2 268 682
- US-A- 2 479 941
- US-A- 4 374 444
- US-A- 5 524 315

## Beschreibung

Die Erfindung betrifft ein Rotationswerkzeug zur Oberflächenbearbeitung, mit einem rotativ antreibbaren Bürstenhalter für eine Ringbürste mit einem Bürstenband und von dem Bürstenband nach außen abstehenden Borsten, wobei dem Bürstenhalter und/oder der Ringbürste ein Kühlmedium zu deren Kühlung zugeführt wird. - Derartige Rotationswerkzeuge werden in der Ausführungsform als Handwerkzeuge insbesondere zum Entlacken, Entfernen von Korrosionen und Unterbodenschutz sowie zum Aufrauen von metallischen Oberflächen eingesetzt.

Ein Rotationswerkzeug der eingangs beschriebenen Ausgestaltung wird in der GB 2 268 682 A beschrieben. Hier sind in einem Bürstenhalter radial verlaufende Schlitze vorgesehen, mit deren Hilfe beispielsweise Luft als Kühlmedium zugeführt wird. Als Folge hiervon muss der Bürstenhalter aufwendig gestaltet werden und ist der Kühleffekt an die Rotation des Bürstenhalters gekoppelt.

Darüber hinaus kennt man ein Rotationswerkzeug durch die DE 43 26 793 C1. Hier geht es darum, eine intensive Oberflächenbearbeitung zu gewährleisten und darüber hinaus eine erhöhte Lebensdauer zu erreichen.

Ungeachtet dessen wird in der EP 0 691 181 B1 ein mit Druckluft angetriebenes Polierwerkzeug beschrieben, welches allerdings nicht mit einem Bürstenhalter für eine Ringbürste mit einem Bürstenband ausgerüstet ist. Vielmehr wird ein Polierkissen rotativ angetrieben. Zusätzlich wird ein Kühlluftdurchgang zum Injizieren von Luft durch einen Luftdurchgang in eine Motordrehwelle in den Mittelteil der Polierarbeitsoberfläche angesprochen.

Beim Arbeitseinsatz der eingangs beschriebenen Rotationswerkzeuge mit Ringbürste kommt es unter starker Belastung zur Erwärmung nicht nur der Borsten und des Bürstenbandes, sondern auch des regelmäßig aus Stahl, Aluminium oder aus einem anderen Metall bestehenden Werkzeughalters bzw. Bürstenhalters. Dadurch sinkt die Festigkeit insbesondere des walkenden Bürstenbandes rapide ab, so dass es nicht nur zu einem vorzeitigen Verschleiß der Borsten, sondern auch zu einer vorzeitigen Beschädigung und schließlich zu einem Reißen des Bürstenbandes kommen kann. - Hier will die Erfindung Abhilfe schaffen.

Der Erfindung liegt das technische Problem zugrunde, ein Rotationswerkzeug der eingangs beschriebenen Ausführungsform zu schaffen, welches sich in einfacher und funktionsgerechter Weise durch erhöhte Standfestigkeit selbst bei Extrembelastungen auszeichnet.

Zur Lösung dieser Aufgabe lehrt die Erfindung bei einem gattungsgemäßen Rotationswerkzeug zur Oberflächenbearbeitung, dass ein Pneumatikantrieb vorgesehen ist und Abluft des Pneumatikantriebes dem Bürstenhalter und/oder der Ringbürste als Kühlmedium zugeführt wird. Das erweist sich besonders vorteilhaft vor dem Hintergrund, dass das Bürstenband insbesondere aus Polyamidgewebe gefertigt ist und es sich bei den Borsten um vorzugsweise Drahtborsten handelt.

Als alternative Lösung schlägt die Erfindung bei einem gattungsgemäßen Rotationswerkzeug zur Oberflächenbearbeitung vor, dass ein Pneumatikantrieb mit einer zugehörigen Druckluftzufuhr für den Pneumatikantrieb vorgesehen ist, wobei von der Druckluftzufuhr eine Frischluftleitung abzweigt und auf den Bürstenhalter und/oder die Ringbürste gerichtet ist und diesen Frischluft als Kühlmedium zuführt. - Selbstverständlich können auch beide Lösungen kombiniert werden.

Bei der Kühlvorrichtung handelt es sich folglich in beiden Fällen um den Pneumatikantrieb. Dabei ist das Kühlmedium mittels einer von dem Rotationswerkzeug separaten Kühlvorrichtung zuführbar. Nach einer anderen Ausführungsform kann das Kühlmedium mittels eine mit dem Rotationswerkzeug verbundenen oder in das Rotationswerkzeug integrierten Kühlvorrichtung zugeführt werden. Als Kühlmedium kann ein gasförmiges Medium, z. B. Luft oder ein flüssiges Medium, z. B. Wasser, zugeführt werden. Stets findet eine derart starke Kühlung des Bürstenbandes, seiner Borsten und ggf. auch des Werkzeughalters bzw. Bürstenhalters statt, dass selbst bei extremer Belastung nicht länger eine solche Erwärmung der vorgenannten Werkzeugelemente auftritt, die schließlich zu deren Beschädigung führen kann.

Das gilt insbesondere für das in Folge der Rotation unter Schlaufenbildung mechanisch stark belastete und sich erhitzende Bürstenband bzw. dessen Trägergewebe aus z. B. Polyamid. Eine Kühlung des rotierenden Bürstenbandes reduziert dessen Deformationen und verhindert einen Bandriss. Folglich wird die Standfestigkeit des erfindungsgemäßen Rotationswerkzeuges und insbesondere seiner Werkzeugelemente ganz erheblich erhöht, und zwar in einfacher und funktionsgerechter Weise.

Dabei wird das Rotationswerkzeug mit dem Pneumatikantrieb beaufschlagt. In diesem Fall haben sich die beiden zuvor beschriebenen Alternativen bewährt, um für die erforderliche Kühlung des Bürstenhalters und/oder der Ringbürste mit dem Kühlmedium zu sorgen. Zum einen kann als Kühlmedium Abluft des Pneumatikantriebes dem Bürstenhalter und/oder der Ringbürste, insbesondere dem Bürstenband und gegebenenfalls den Borsten, zugeführt werden. Zum anderen besteht die Möglichkeit, von der Druckluftzufuhr für den Pneumatikantrieb eine Frischluftleitung abzuzweigen und deren Austrittsende auf den Bürstenhalter und/oder die Ringbürste, insbesondere das Bürstenband, zu richten. Im Detail mag die Frischluftleitung hierzu bzw. deren Austrittsende mit einer Frischluftaustrittsdüse bestückt sein, wobei die Frischluftleitung bis in den Bereich des Bürstenhalters geführt und die Frischluftaustrittsdüse auf den Bürstenhalter und/oder die Ringbürste und insbesondere das Bürstenband gerichtet ist.

Im Rahmen der ersten Alternative wird die Abluft des Pneumatikantriebes über eine Abluftleitung dem Bürstenhalter und/oder der auf dem Bürstenhalter angeordneten Ringbürste und hier insbesondere deren Bürstenband zur Kühlung zugeführt. Diese Maßnahmen der Erfindung haben zur Folge, dass die Abluft des Pneumatikantriebes zur Kühlung des Werkzeuges insgesamt und folglich insbesondere des Bürstenbandes genutzt wird. Dabei geht die Erfindung von der Erkenntnis aus, dass die normalerweise nach hinten respektive außen austretende Abluft aufgefangen und außerhalb des Rotationswerkzeuges zurück nach vorn zum rotativ angetriebenen Werkzeug respektive der Ringbürste mit Bürstenband und Drahtborsten geführt werden kann. Selbstverständlich ist es auch denkbar, die Abluftleitung ins Innere des Rotationswerkzeuges zu verlagern.

Bei der zweiten Alternative wird demgegenüber von der Druckluftzufuhr abgezweigte Frischluft für die Kühlung der Ringbürste und hier insbesondere des Bürstenbandes eingesetzt. Dabei ist in beiden Fällen nach einem Vorschlag mit selbständiger Bedeutung vorgesehen, dass der Werkzeughalter bzw. Bürstenhalter frischluftseitig oder abluftseitig, also auf der Seite, auf der die Frischluft oder Abluft zur Kühlung zugeführt wird, mit Turbinenschaufeln bestückt ist. Ebenso gut ist es möglich, auf einer Rotationsachse des Bürstenhalters ein turbinenartiges Schaufelrad anzuordnen und mit Frischluft oder Abluft oder dem ebenfalls denkbaren separat zugeführten Kühlmedium zu beaufschlagen. Das Gleiche gilt für die Turbinenschaufeln.

Dadurch wird die Energie der aus der Druckluftzufuhr für den Pneumatikantrieb abgezweigten und zu den Turbinenschaufeln bzw. dem Schaufelrad ebenso wie dem Bürstenhalter und der Ringbürste umgelenkten Frischluft voll ausgenutzt. Denn über die Turbinenschaufeln bzw. das Schaufelrad erfolgt eine gleichsam Drehmomentenunterstützung am rotativ angetriebenen Bürstenhalter. Das gleiche gilt für die aus dem Pneumatikantrieb ausströmende und zu den Turbinenschaufeln bzw. dem Schaufelrad ebenso wie zu dem Bürstenhalter und dem Bürstenband umgelenkte Abluft, die in gleicher Weise voll ausgenutzt wird, um mit Abluft zu kühlen.

Selbstverständlich kann die beschriebene Kühlung mit Abluft auch mit einer Kühlung mit Frischluft kombiniert werden. Es ist auch denkbar, die jeweiligen Anteile zu variieren. Da die Frischluft regelmäßig eine geringere Temperatur als die Abluft aufweist, wird man bei hohem Kühlbedarf überwiegend mit Frischluft kühlen und umgekehrt.

Sofern das rotativ angetriebene Werkzeug und insbesondere die Ringbürste zumindest teilweise von einer Schutzhaube umgeben ist, weist diese Schutzhaube Durchtrittsöffnungen für die Zufuhr und Abfuhr der Frischluft oder Abluft auf und kann im Übrigen zur stirnseitigen Kühlung des Bürstenbandes und seiner Borsten herangezogen werden. Ferner besteht die Möglichkeit zur Installation einer Kühlvorrichtung wie beispielsweise einer Kühlmittelpatrone, z. B. Luftpatrone - Vorzugsweise ist dem Pneumatikantrieb abluftseitig eine Abluftfangvorrichtung, z. B. Ablufthaube, zugeordnet und an diese Abluftfangvorrichtung die Abluftleitung angeschlossen. Ferner sieht die Erfindung vor, dass die Abluftleitung am Austrittsende eine Abluftaustrittsdüse aufweist, die gezielt auf die Turbinenschaufeln bzw. das Schaufelrad und den Bürstenhalter mit der Ringbürste gerichtet ist. Vorzugsweise wird die Breitseite des Bürstenhalters mit den Turbinenschaufeln und der Ringbürste in einem vorgegebenen Anstellwinkel mit Frischluft oder Abluft angeblasen.

Im Folgenden wird die Erfindung anhand einer lediglich ein Ausführungsbeispiel darstellenden Zeichnung näher erläutert. Es zeigen:
- **Fig. 1**: ein erfindungsgemäßes Rotationswerkzeug in schematischer Seitenansicht,
- **Fig. 2**: den Gegenstand nach Fig. 1 in Draufsicht mit entfernter Schutzhaube und teilweise entferntem Werkzeuggehäuse,
- **Fig. 3**: eine abgewandelte Ausführungsform des Gegenstandes nach Fig. 1 mit einer Frischluftleitung und
- **Fig. 4**: eine Draufsicht auf den Gegenstand nach Fig. 1 mit entfernter Schutzhaube und teilweise entferntem Werkzeuggehäuse.

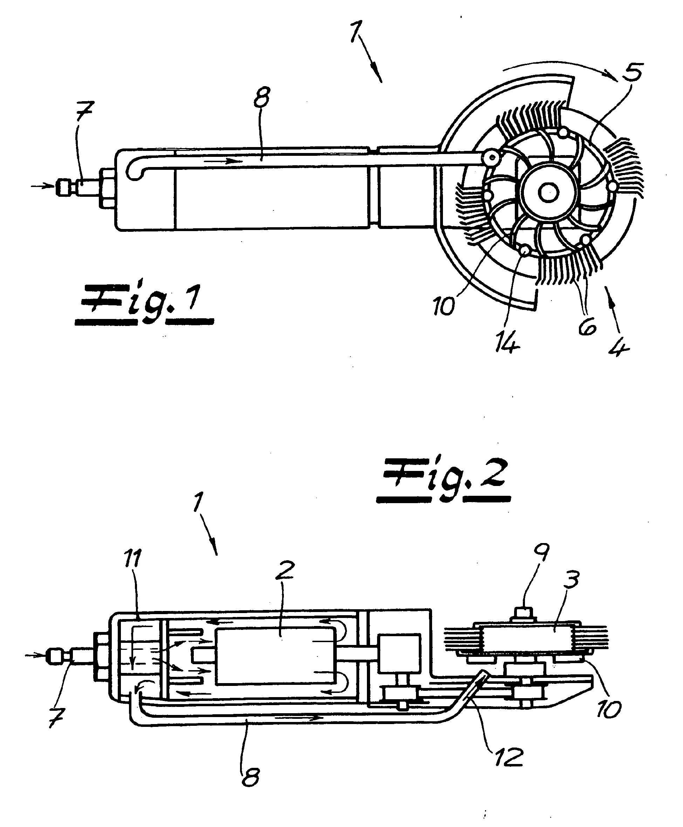

In den Fig. 1 und 2 ist ein Rotationswerkzeug 1 zur Oberflächenbearbeitung dargestellt, welches in seinem grundsätzlichen Aufbau einen Pneumatikantrieb 2 und einen rotativ antreibbaren Werkzeughalter 3, nach dem Ausführungsbeispiel Bürstenhalter 3, für eine Ringbürste 4 mit einem Bürstenband 5 und von dem Bürstenband 5 nach außen abstehenden Borsten 6 aufweist. Bei den Borsten 6 handelt es sich insbesondere und nicht einschränkend um Drahtborsten. Ferner ist eine Druckluftzufuhr 7 für den Pneumatikantrieb 2 vorgesehen.

Nach einer ersten Alternative, wie sie die Fig. 1 und 2 zeigt, wird die Abluft des Pneumatikantriebes 2 über eine Abluftleitung 8 dem Bürstenhalter 3 und/oder der Ringbürste 4 mit den Borsten 6 als Kühlmedium zu deren Kühlung zugeführt. Gleichzeitig sorgt die Abluft für eine Drehmomentenunterstützung des rotativ angetriebenen Bürstenhalters 3. Zu diesem Zweck ist der Bürstenhalter 3 abluftseitig - d. h. einem abluftseitigen Austrittsende der Abluftleitung 8 bzw. einer dortigen Abluftdüse 12 zugewandt - mit Turbinenschaufeln 10 bestückt, welche ebenfalls - d. h. zusätzlich zu dem Bürstenhalter 3 und/oder der Ringbürste 4 - mit der Abluft beaufschlagt werden. Dadurch wird die Energie der aus der Abluftleitung 8 ausströmenden Abluft wie beschrieben zur Drehmomentenunterstützung des rotativ angetriebenen Bürstenhalters 3 ausgenutzt.

Ferner ist dem Pneumatikantrieb 2 im Bereich eines Ablufteintrittes - also abluftaustrittsseitig des Pneumatikantriebes 2 - eine Abluftfangvorrichtung 11 zugeordnet, welche beispielhaft und nicht einschränkend als Abluftfanghaube ausgebildet ist. An diese Abluftfangvorrichtung 11 ist die Abluftleitung 8 angeschlossen, die im Rahmen des Ausführungsbeispiels auf der Außenseite des Rotationswerkzeuges 1 bzw. eines zugehörigen Gehäuses zu dem Bürstenhalter 3 mit der Ringbürste 4 und den Turbinenschaufeln 10 zugeführt wird. Am Austrittsende der Abluftleitung 8 ist die bereits angesprochene Abluftdüse 12 bzw. Abluftaustrittsdüse vorgesehen, die auf die Turbinenschaufeln 10 ebenso wie auf den Bürstenhalter 3 mit der davon aufgenommenen Ringbürste 4 gerichtet ist.

Das in den Fig. 1 und 2 dargestellte Werkzeugaggregat ist insgesamt mit einer teilweise in der Fig. 1 angedeuteten Schutzhaube 13 umgeben, welche ebenso wie ein Ausleger für den rotativ angetriebenen Bürstenhalter 3 mit Durchtrittsöffnungen 14 für die Zufuhr und Abfuhr der Abluft ausgerüstet ist. - Anhand der Schnittdarstellung in Fig. 1 erkennt man schließlich noch, dass das über die Druckluftzufuhr 7 zum Pneumatikantrieb 2 zugeführte Pneumatikmedium, im Beispielfall Druckluft, im Gehäuse des Rotationswerkzeuges 1 nach Passieren des Pneumatikantriebes 2 um ca. 180° umgelenkt wird und dann gleichsam in Richtung auf die Druckluftzufuhr 7 zurückgeführt wird. An diesem abluftaustrittsseitigen Ende des Pneumatikantriebes 2 ist dann die Abluftfangvorrichtung 11 vorgesehen, welche die Abluft sammelt und in die Abluftleitung 8 überführt.

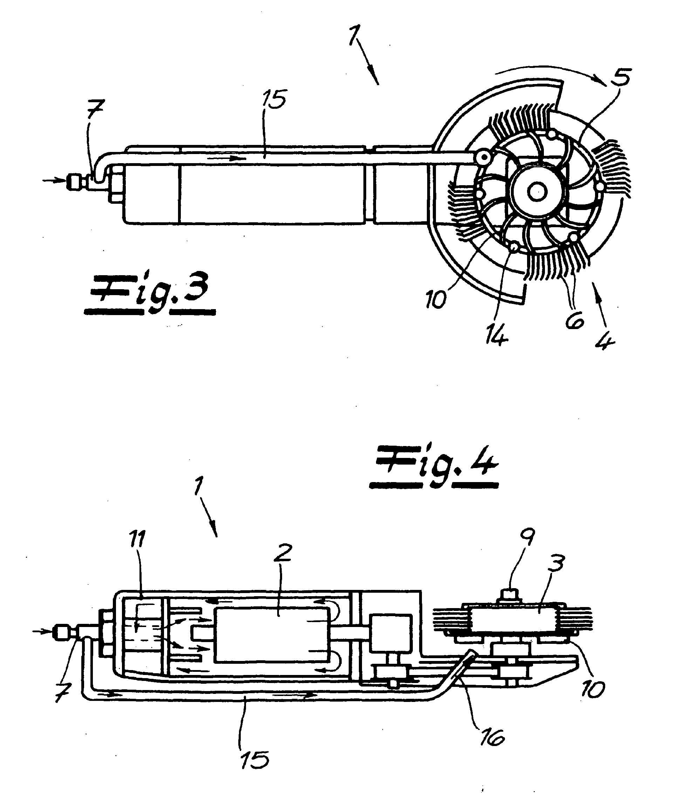

Bei der in den Fig. 3 und 4 dargestellten abgewandelten Ausführungsform ist eine von der Druckluftzufuhr 7 abzweigende Frischluftleitung 15 verwirklicht Die Frischluftleitung 15 verfügt an ihrem Austrittsende für die Frischluft über eine Frischluft(austritts)düse 16, die bis in den Bereich des Bürstenhalters 3 geführt und auf den Bürstenhalter 3 und/oder die Ringbürste 4 gerichtet ist und mit Hilfe von Frischluft als Kühlmedium für deren Kühlung sorgt. Insbesondere wird in beiden Fällen das Bürstenband 5 gekühlt. Das heißt, sowohl die Frischluftaustrittsdüse 16 als auch die Abluftaustrittsdüse 12 sind bevorzugt auf das Bürstenband 5 mit seinen Borsten 6 gerichtet, wobei sowohl die Abluft als auch die Frischluft das Bürstenband 5 schräg, d. h. unter einem Winkel von ca. 45° gegenüber der Längserstreckung in Aufsicht, anströmen. Der vorerwähnte Winkel von ca. 45° wird auch zwischen der Breitseite des Bürstenbandes 5 und der jeweiligen Düse 12, 16 eingeschlossen. Dadurch werden die Turbinenschaufeln 10 in ihrer abluft- bzw. frischluftseitigen Anbringung an dem Bürstenhalter 3 - zur Drehmomentenunterstützung - entsprechend beaufschlagt. Das gleiche gilt für ein hier etwaig vorgesehenes Schaufelrad.

Im Rahmen der Erfindung besteht auch die Möglichkeit, die Abluft des Pneumatikantriebes 2 der Ringbürste 4 bzw. deren Bürstenband 5 und auch den Borsten 6 unmittelbar als Kühlmedium zuzuleiten. Dann ist keine Abluftleitung 8 verwirklicht, sondern wird die Abluft vielmehr nach ihrem Austritt aus dem Pneumatikantrieb 2 über eine zwischengeschaltete und nicht dargestellte Umlenkvorrichtung unmittelbar auf den Bürstenhalter 3 bzw. die Ringbürste 4 und insbesondere das Bürstenband 5 gerichtet.

## Patentansprüche

1. Rotationswerkzeug (1) zur Oberflächenbearbeitung, mit einem rotativ antreibbaren Bürstenhalter (3) für eine Ringbürste (4) mit einem Bürstenband (5) und von dem Bürstenband (5) nach außen abstehenden Borsten (6), wobei dem Bürstenhalter (3) und/oder der Ringbüste (4) ein Kühlmedium zu deren Kühlung zugeführt wird,
**dadurch gekennzeichnet,dass**
ein Pneumatikantrieb (2) vorgesehen ist und Abluft des Pneumatikantriebes (2) dem Bürstenhalter (3) und/oder der Ringbürste (4) als Kühlmedium zugeführt wird.

2. Rotationswerkzeug (1) zur Oberflächenbearbeitung, mit einem rotativ antreibbaren Bürstenhalter (3) für eine Ringbürste (4) mit einem Bürstenband (5) und von dem Bürstenband (5) nach außen abstehenden Borsten (6), wobei dem Bürstenhalter (3) und/oder der Ringbürste (4) ein Kühlmedium zu deren Kühlung zugeführt wird,
**dadurch gekennzeichnet, dass**
ein Pneumatikantrieb (2) mit einer zugehörigen Druckluftzufuhr (7) für den Pneumatikantrieb (2) vorgesehen ist, wobei von der Druckluftzufuhr (7) eine Frischluftleitung (15) abzweigt und auf den Bürstenhalter (3) und/oder die Ringbürste (4) gerichtet ist und diesen Frischluft als Kühlmedium zuführt.

3. Rotationswerkzeug nach Anspruch 1 oder 2, **dadurch gekennzeichnet, dass** als Kühlmedium ein gasförmiges Medium, z. B. Luft oder ein flüssiges Medium, z. B. Wasser, zuführbar ist.

4. Rotationswerkzeug (1) nach einem der Ansprüche 1 bis 3, **dadurch gekennzeichnet, dass** auf einer Rotorachse (9) des Bürstenhalters (3) ein turbinenartiges Schaufelrad angeordnet und mit Frischluft oder Abluft beaufschlagbar ist.

5. Rotationswerkzeug (1) nach einem der Ansprüche 1 bis 4, **dadurch gekennzeichnet, dass** der Bürstenhalter (3) auf seiner mit Frischluft oder Abluft beaufschlagten Seite mit Turbinenschaufeln (10) bestückt ist.

6. Rotationswerkzeug (1) nach einem der Ansprüche 1 bis 5, **dadurch gekennzeichnet, dass** dem Pneumatikantrieb (2) abluftseitig eine Abluftfangvorrichtung (11) zugeordnet ist.

## Claims

1. A rotary tool (1) for surface machining with a brush holder (3) that can be driven in a rotational manner for a ring brush (4) with a brush band (5) and bristles (6) standing away from the brush band (5) to the outside, wherein the brush holder (3) and/or the ring brush (4) are/is supplied with a cooling medium for cooling,
**characterized in that**
a pneumatic drive (2) is provided and waste air of the pneumatic drive (2) is supplied to the brush holder (3) and/or the ring brush (4) as cooling medium.

2. A rotary tool (1) for surface machining with a brush holder (3) that can be driven in a rotational manner for a ring brush (4) with a brush band (5) and bristles (6) standing away from the brush band (5) to the outside, wherein the brush holder (3) and/or the ring brush (4) are/is supplied with a cooling medium for cooling,
**characterized in that**
a pneumatic drive (2) with a corresponding compressed-air supply (7) for the pneumatic drive (2) is provided, wherein a fresh air line (15) branches off the compressed-air supply (7) and is directed onto the brush holder (3) and/or the ring brush (4), supplying these with fresh air as cooling medium.

3. The rotary tool according to claim 1 or 2, **characterized in that** a gaseous medium, e.g. air or a liquid medium e.g. water, can be supplied as cooling medium.

4. The rotary tool (1) according to any one of the claims 1 to 3, **characterized in that** on a rotor shaft (9) of the brush holder (3) a turbine-like impeller is arranged which can be supplied with fresh air or waste air.

5. The rotary tool (1) according to any one of the claims 1 to 4, **characterized in that** the brush holder (3) on its side supplied with fresh air or waste air is equipped with turbine blades (10).

6. The rotary tool (1) according to any one of the claims 1 to 5, **characterized in that** a waste air collection device (11) is assigned to the pneumatic drive (2) on the waste air side.

## Revendications

1. Outil rotatoire (1) pour l'usinage surfacique, comprenant un porte-brosses (3) pouvant être entraîné en rotation pour une brosse annulaire (4) comprenant une bande de brossage (5) et des poils de brossage (6) dépassant depuis la bande de brossage (5) vers l'extérieur, dans lequel une matière de refroidissement est amenée vers le porte-brosses (3) et/ou vers la brosse annulaire (4) pour leur refroidissement,
**caractérisé en ce qu'**un entraînement pneumatique (2) est prévu et **en ce que** l'air vicié de l'entraînement pneumatique (2) est amené vers le porte-brosses (3) et/ou vers la brosse annulaire (4) comme matière de refroidissement.

2. Outil rotatoire (1) pour l'usinage surfacique, comprenant un porte-brosses (3) pouvant être entraîné en rotation pour une brosse annulaire (4) comprenant une bande de brossage (5) et des poils de brossage (6) dépassant depuis la bande de brossage (5) vers l'extérieur, dans lequel une matière de refroidissement est amenée vers le porte-brosses (3) et/ou vers la brosse annulaire (4) pour leur refroidissement,
**caractérisé en ce qu'**un entraînement pneumatique (2) est prévu avec un apport d'air comprimé correspondant (7) pour l'entraînement pneumatique (2), sachant qu'une conduite d'air frais (15) dérive de l'apport d'air comprimé (7) et est dirigée vers le porte-brosses (3) et/ou vers la brosse annulaire (4) et que cet air frais est amené comme matière de refroidissement.

3. Outil rotatoire selon l'une ou l'autre des revendications 1 et 2, **caractérisé en ce qu'**une matière gazeuse, par exemple de l'air, ou une matière liquide, par exemple de l'eau, peut être amenée comme matière de refroidissement.

4. Outil rotatoire (1) selon l'une des revendications 1 à 3, **caractérisé en ce qu'**une roue à pales à la manière d'une turbine est agencée sur un axe de rotor (9) du porte-brosses (3) et peut être alimentée en air frais ou en air vicié.

5. Outil rotatoire (1) selon l'une des revendications 1 à 4, **caractérisé en ce que** le porte-brosses (3) est équipé de pales de turbine (10) sur son côté alimenté en air frais ou en air vicié.

6. Outil rotatoire (1) selon l'une des revendications 1 à 5, **caractérisé en ce qu'**un dispositif de captage d'air vicié (11) est attribué à l'entraînement pneumatique (2) du côté de l'air vicié.
